# EUROPEAN PATENT APPLICATION

(11) **EP 3 128 360 A1**
(43) Date of publication of application: **08.02.2017**
(21) Application number: 15772664.7
(22) Date of filing: 17.03.2015
(51) Int. Cl.: G02B 27/22, G06F 3/01, G09F 9/00, G09F 9/40, H04N 5/66

(54) **ELECTRONIC DEVICE**

(30) Priority: 31.03.2014 JP 2014072475
(71) Applicant: Sony Corporation, Tokyo 108-0075 (JP)
(72) Inventor: FUKUMA, Yohei, Tokyo 108-0075 (JP); ONO, Hiroyuki, Tokyo 108-0075 (JP); KANEDA, Kazumasa, Tokyo 108-0075 (JP); NAKAO, Isamu, Tokyo 108-0075 (JP)
(74) Representative: Witte, Weller & Partner Patentanwälte mbB
(86) International application number: PCT/JP2015/057850
(87) International publication number: WO 2015/151799

(57) **Abstract**

An electronic apparatus includes a first display section (10) and a second display section (20) that are disposed in proximity to each other beneath a principal surface (50A) of a housing (50). The first display section generates a first image (image 100, image light L1) on the principal surface, and the second display section generates a picture imaged in the air as a second image (image 200, image light L2).

## Description

### Technical Field

The present technology relates to an electronic apparatus that performs two-screen display.

### Background Art

In recent years, a mobile terminal with a built-in display device enabling touch input has become widespread (for example, see PTL 1).

### Citation List

### Patent Literature

[PTL 1] Japanese Unexamined Patent Application Publication No. 2012-181867

### Summary of the Invention

In the above-described mobile terminal, the area of a display surface is limited. Therefore, for example, when contents and the like to be highlighted to a user as necessary are to be displayed separately, it may be considered to perform thumbnail display in a mode of disturbing contents being originally displayed. In such a case, however, a part of contents being originally displayed may be hidden. Instead of disturbing the original display, it may be also considered to divide a display surface into a plurality of regions and assign the original display and renewed display for each of the divided regions. In such a case, however, the original display may be reduced in size according to the number of the divided regions. Alternatively, it may be also considered to enlarge a size of a region assigned to the original display and significantly reduce a size of a region assigned to the renewed display. In such a case, however, it is likely that the renewed display will be caught up in the original display.

Accordingly, it is desirable to provide an electronic apparatus that makes it possible to perform renewed display that is unlikely to be caught up in the original display, while minimizing an adverse influence on the visibility of the original display.

An electronic apparatus according to an embodiment of the present technology includes a first display section and a second display section that are disposed in proximity to each other beneath a principal surface of a housing. The first display section generates a first image on the principal surface. The second display section generates a picture imaged in air as a second image.

In the electronic apparatus according to an embodiment of the present technology, the first display section and the second display section are disposed in proximity to each other beneath the principal surface of the housing. Accordingly, for example, when a user uses either the first display section or the second display section mainly, the user may perform renewed display using either display section that has not been used mainly. Therefore, it is possible to perform renewed display without disturbing display of the display section that has been used mainly. Additionally, in an embodiment of the present technology, the first display section and the second display section perform display in modes different from each other. As a result, for example, when the user uses either the first display section or the second display section mainly, it is possible to reduce the possibility that renewed display will be caught up in the original display if the user performs renewed display using either display section that has not been used mainly.

According to the electronic apparatus according to an embodiment of the present technology, the first display section and the second display section are disposed in proximity to each other beneath the principal surface of the housing, and further the first display section and the second display section perform display in modes different from each other. Therefore, it is possible to perform renewed display that is unlikely to be caught up in the original display, while minimizing an adverse influence on the visibility of the original display. It is to be noted that effects of the embodiments of the present technology are not necessarily limited thereto, and may include any of effects that will be described in the present specification.

### Brief Description of Drawings

[FIG. 1] FIG. 1 is a diagram illustrating an example of a perspective configuration of an electronic apparatus according to a first embodiment of the present technology.
[FIG. 2] FIG. 2 is a diagram illustrating an example of a cross-sectional configuration of the electronic apparatus along A-A' line illustrated in FIG. 1.
[FIG. 3] FIG. 3 is a diagram illustrating an example of a planar configuration of an optical plate illustrated in FIG. 1.
[FIG. 4] FIG. 4 is a diagram illustrating an example of operation in X-Y plane for the optical plate illustrated in FIG. 1.
[FIG. 5] FIG. 5 is a diagram illustrating an example of operation in X-Z plane and in Y-Z plane for the optical plate illustrated in FIG. 1.
[FIG. 6] FIG. 6 is a diagram illustrating an example of operation of the electronic apparatus illustrated in FIG. 2.
[FIG. 7] FIG. 7 is a diagram illustrating a modification example of the electronic apparatus illustrated in FIG. 2.
[FIG. 8] FIG. 8 is a diagram illustrating an example of operation of an electronic apparatus illustrated in FIG. 7.
[FIG. 9] FIG. 9 is a diagram illustrating another modification example of the electronic apparatus illustrated in FIG. 2.
[FIG. 10] FIG. 10 is a diagram illustrating an example of operation of an electronic apparatus illustrated in FIG. 9.
[FIG. 11] FIG. 11 is a diagram illustrating still another modification example of the electronic apparatus illustrated in FIG. 2.
[FIG. 12] FIG. 12 is a diagram illustrating a modification example of the electronic apparatus illustrated in FIG. 7.
[FIG. 13] FIG. 13 is a diagram illustrating a modification example of the electronic apparatus illustrated in FIG. 9.
[FIG. 14] FIG. 14 is a diagram illustrating an example of a perspective configuration of an electronic apparatus according to a second embodiment of the present technology.
[FIG. 15] FIG. 15 is a diagram illustrating an example of a cross-sectional configuration of the electronic apparatus along B-B' line illustrated in FIG. 14.
[FIG. 16] FIG. 16 is a diagram illustrating an example of operation of the electronic apparatus illustrated in FIG. 15.
[FIG. 17] FIG. 17 is a diagram illustrating a modification example of the electronic apparatus illustrated in FIG. 15.

### Description of Embodiments

Hereinafter, some embodiments of the present technology will be described in detail with reference to the drawings. It is to be noted that description will be given in the following order.

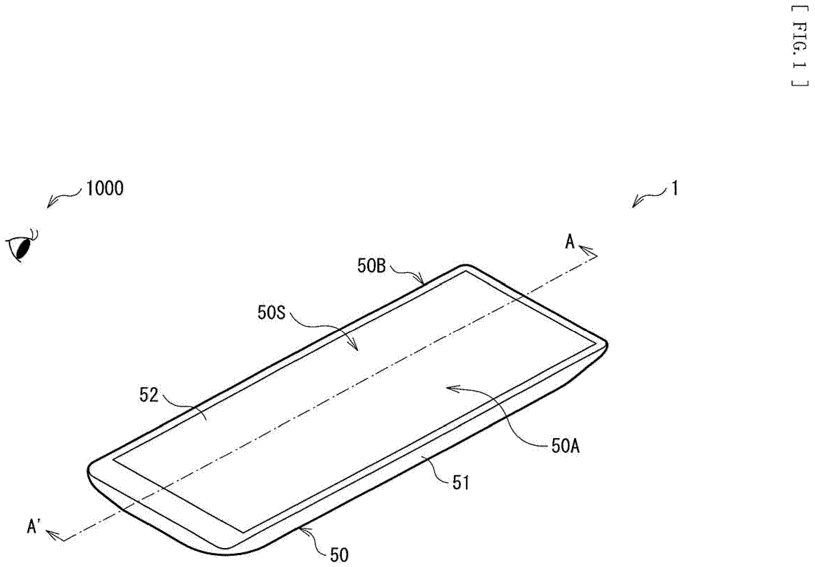

### 1. First Embodiment (FIG. 1 to FIG. 6)

An example where two display sections are disposed in a longitudinal direction

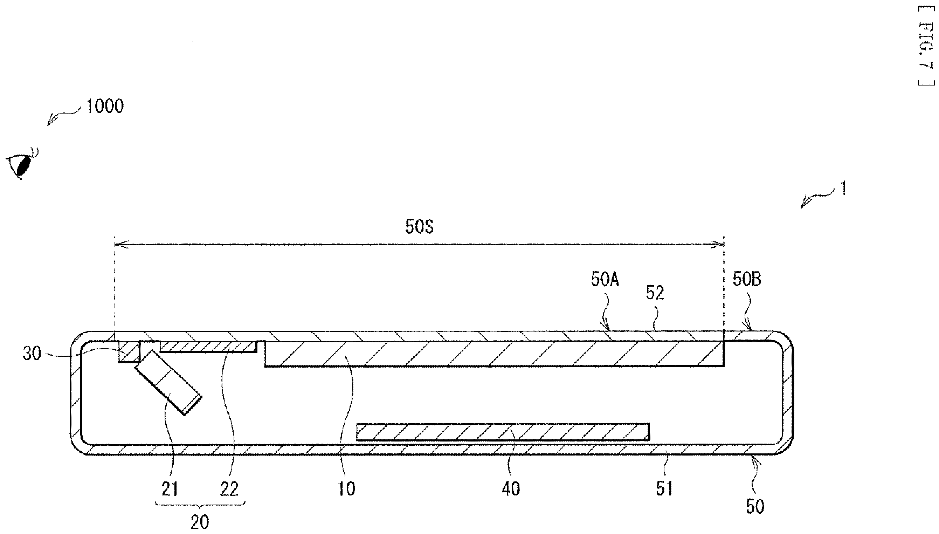

### 2. Modification Examples of First Embodiment (FIG. 7 to FIG. 13)

Modification Example A: an example where positions of two display sections are interchanged with each other
Modification Example B: an example where a display section for generating a image through in-air imaging bears a master display function
Modification Example C: an example where a display section is provided with a sensor function

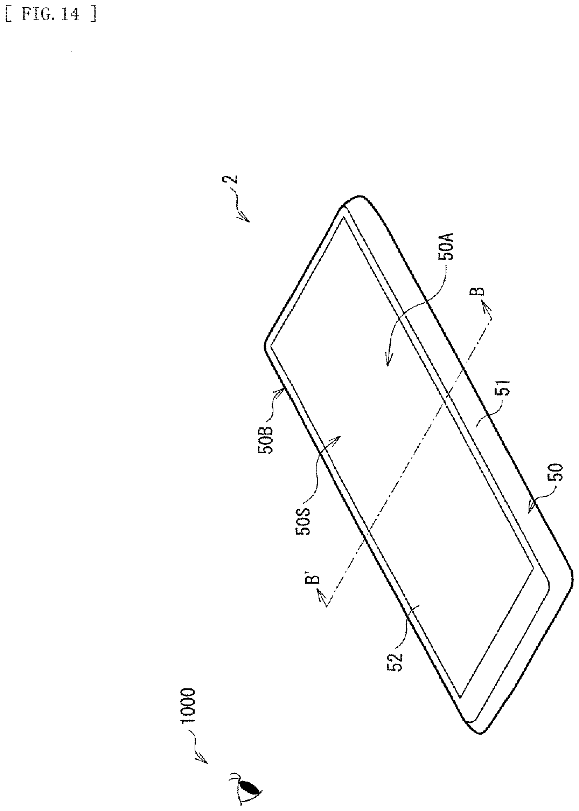

### 3. Second Embodiment (FIG. 14 to FIG. 16)

An example where two display sections are disposed in a transverse direction

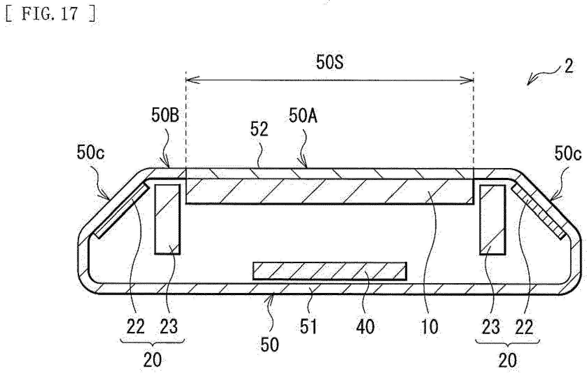

### 4. Modification Example of Second Embodiment (FIG. 17)

Modification Example D: an example where a display section is provided with a sensor function

### <1. First Embodiment>

### [Configuration]

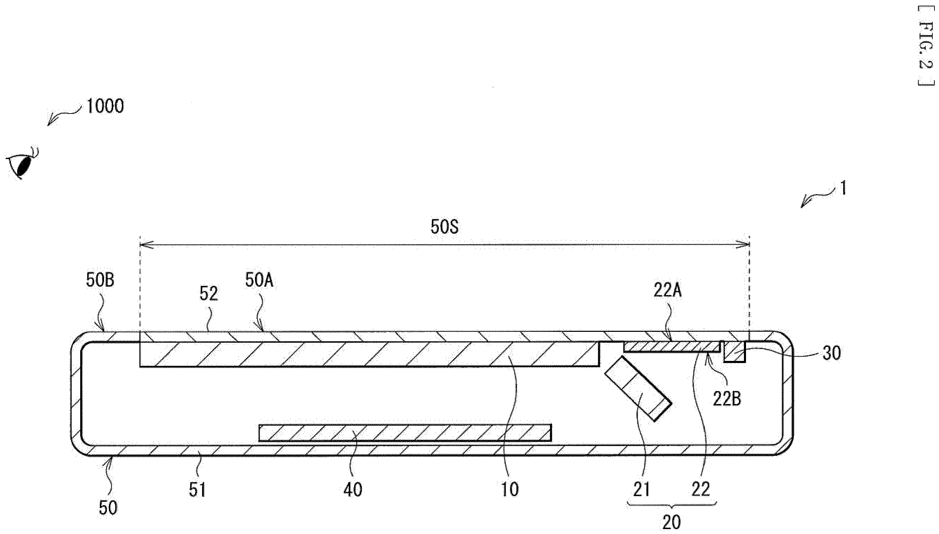

FIG. 1 illustrates an example of a perspective configuration of an electronic apparatus 1 according to a first embodiment of the present technology. FIG. 2 illustrates an example of a cross-sectional configuration of the electronic apparatus 1 along A-A' line illustrated in FIG. 1. The electronic apparatus I makes it possible to perform two-screen display. The two-screen display refers to the display of images on two regions. The electronic apparatus 1 displays images on at least one region between two regions that enable display of images to be performed. In disregard of the capability of performing two-screen display, the electronic apparatus 1 is provided with only a single physical image display surface. In other words, the electronic apparatus 1 has no need of two physical image display surfaces for performing two-screen display. This does not exclude to provide one or more image display surfaces separately for performing any display other than the above-described two-screen display.

For example, as illustrated in FIG. 1, the electronic apparatus 1 may be provided with only a single frame 50B on a principal surface 50A of a housing 50 of the electronic apparatus 1, and may be further provided with a physical image display surface 50S within the frame 50B. For example, as illustrated in FIG. 2, the electronic apparatus 1 may include display sections 10 and 20, a non-contact input section 30, and a control section 40 inside the housing 50 of the electronic apparatus 1. The "display section 10" corresponds to a specific example of a "first display section" of the present technology. The "display section 20" corresponds to a specific example of a "second display section" of the present technology. The "non-contact input section 30" corresponds to a specific example of a "non-contact input section" of the present technology. The non-contact input section 30 may be omitted as appropriate.

The housing 50 may have, for example, a pedestal section 51 that accommodates and supports the display sections 10 and 20, the non-contact input section 30, and the control section 40, and a protective substrate 52 that configures the principal surface 50A of the housing 50 and forms an internal space inside the housing 50 along with the pedestal section 51. The protective substrate 52 is a translucent substrate that makes light outgoing from the display sections 10 and 20 transmissive therethrough at least, and may be preferably a translucent substrate that also makes light used in the non-contact input section 30 transmissive therethrough. The protective substrate 52 may be, for example, a glass substrate or a resin substrate that makes visible light or infrared light transmissive therethrough. The display sections 10 and 20 are disposed in proximity to each other underneath the principal surface 50A of the housing 50 (that is, at a location opposed to the principal surface 50A inside the housing 50). Further, the display sections 10 and 20 are disposed underneath the protective substrate 52 (that is, at a location opposed to the protective substrate 52).

### (Display Section 10)

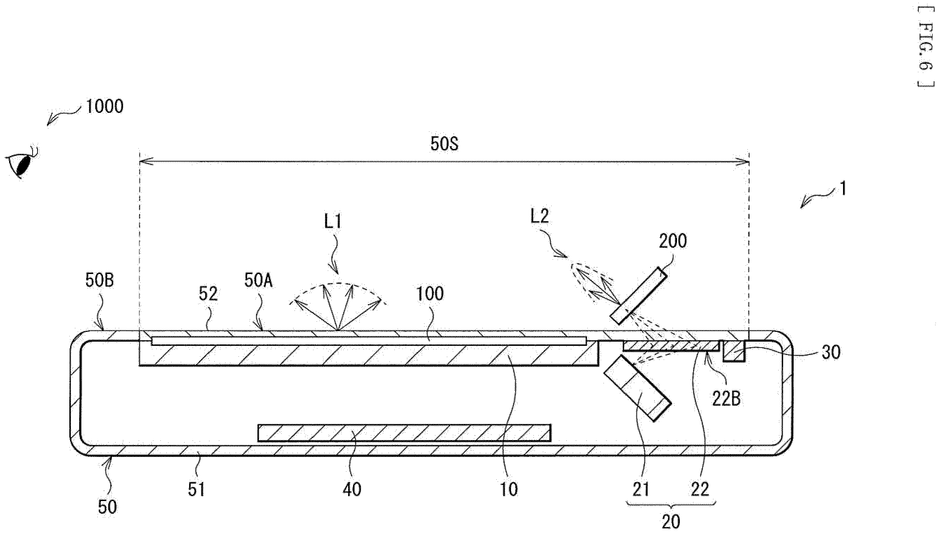

The display section 10 is disposed at a position closer to the lower end of the principal surface 50A (that is, a location close to a viewer 1000 of the electronic apparatus 1) as compared with the display section 20. In the first embodiment, the display section 10 bears a master display function in a relationship with the display section 20, and performs image display using the area wider than the area of an image display region of the display section 20. The display section 10 has a display panel in parallel with a backside of the principal surface 50A. This display panel emits Lambert-approximate image light L1, and generates an image 100 as a real image on the physical image display surface 50S (see FIG. 6 to be hereinafter described). The "image 100" corresponds to a specific example of a "first image" of the present technology.

The above-described display panel may be, for example, a plate-like panel that displays images based on video signals incoming externally, and may be, for example, a liquid crystal panel or an EL (Electroluminescence) panel. The above-described display panel has an image display surface on which a plurality of pixels are arrayed in a matrix pattern. Each of the pixels emits Lambert-approximate divergent light. The above-described display panel emits the divergent light from the image display surface thereof. The light outgoing from the above-described display panel is emitted externally through the protective substrate 52. The display section 10 may have a function of detecting a position in touch with the principal surface 50A or a position in proximity to the principal surface 50A when the viewer 1000 touches the principal surface 50A with a finger or a pen or the like, or moves a finger or a pen or the like closer to the principal surface 50A.

### (Display Section 20)

The display section 20 is disposed at a position closer to the upper end of the principal surface 50A (that is, a location away from the viewer 1000 of the electronic apparatus 1) as compared with the display section 10. In the first embodiment, the display section 20 bears a slave display function in a relationship with the display section 10, and performs image display using the area narrower than the area of an image display region of the display section 10. The display section 20 displays images in the air. Specifically, the display section 20 generates pictures imaged in the air as images. For example, the display section 20 may generate pictures imaged in the air using a light ray with an angle of divergence narrower than a viewing angle of the display section 10 as images. For example, the display section 20 may emit image light L2 with high directivity to generate a picture imaged in the air as an image 200 (see FIG. 6 to be hereinafter described). For example, an angle of divergence of the image light L2 may be narrower than a viewing angle of the display section 10. The "image 200" corresponds to a specific example of a "second image" of the present technology.

The display section 20 may have, for example, a display panel 21 disposed obliquely relative to the backside of the principal surface 50A, and an optical plate 22 disposed between the display panel 21 and the backside of the principal surface 50A. The optical plate 22 is disposed in parallel with the principal surface 50A beneath the principal surface 50A of the housing 50. The "display panel 21" corresponds to a specific example of a "display panel" of the present technology. The "optical plate 22" corresponds to a specific example of an "optical plate" of the present technology.

### (Display Panel 21)

The display panel 21 may be, for example, a plate-like panel that displays images based on video signals incoming externally, and may be, for example, a liquid crystal panel or an EL panel. The display panel 21 has an image display surface on which a plurality of pixels are arrayed in a matrix pattern. Each of the pixels emits Lambert-approximate divergent light. The display panel 21 emits the divergent light from the image display surface thereof. The light outgoing from the display panel 21 is emitted externally through the optical plate 22 and the protective substrate 52.

### (Optical Plate 22)

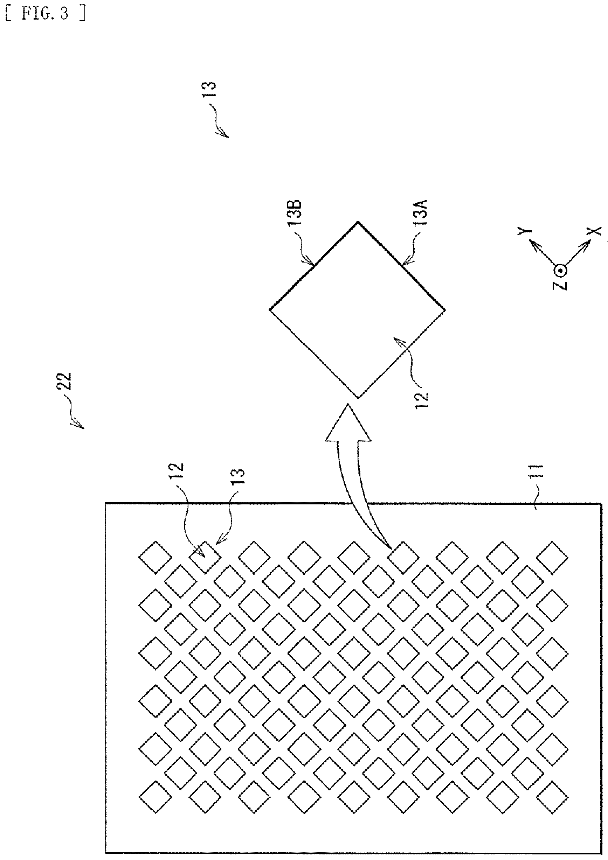

FIG. 3 illustrates an example of a planar configuration of the optical plate 22. The optical plate 22 has a plate-like substrate 11. Here, a surface on the viewer 1000 side of the optical plate 22 (substrate 11) is defined as a front surface 22A, and a surface on the side opposite to the front surface 22A of the optical plate 22 (substrate 11) is defined as a back surface 22B. Further, a surface parallel to the front surface 22A of the optical plate 22 is defined as an X-Y plane; a surface parallel to a reflecting surface 11A to be hereinafter described is defined as an X-Z plane; and a surface parallel to a reflecting surface 11B to be hereinafter described is defined as a Y-Z plane. Moreover, a normal line AX1 of the optical plate 22 (substrate 11) is parallel to a Z-axis.

The optical plate 22 (substrate 11) has a plurality of apertures 12 disposed in a matrix pattern in a plane parallel to the front surface 22A. Each of the apertures 12 passes through the optical plate 22 in a thickness direction (Z-axis direction), and transmits light incident from the back surface 22B of the optical plate 22 therethrough to the front surface 22A side of the optical plate 22. A diameter of each aperture 12 may be, for example, a submicron size (under 1 µm), a size in the micron order (1 to 999 µm), or a size in the millimeter order (1 to 9 mm). Each of the apertures 12 may be, for example, a void. For example, each of the apertures 12 may be provided inside the substrate 11. Alternatively, each of the apertures 12 may be provided inside a convex structure that is formed on the front surface 22A of the substrate 11. The optical plate 22 (substrate 11) may have a light-blocking (light-reflective or light-absorptive) member in a part excluding a part where each of the apertures 12 is formed.

An optical element 13 is provided on a side surface of each aperture 12. In other words, the optical plate 22 has the plurality of optical elements 13 disposed in a matrix pattern in a plane parallel to the front surface 22A. Each of the optical elements 13 may be configured to include, for example, two reflecting surfaces 13A and 13B that are orthogonal to each other. The reflecting surface 13A is parallel to the X-Z plane, and the reflecting surface 13B is parallel to the Y-Z plane. The reflecting surface 13A and the reflecting surface 13B may be provided within the same layer or may be provided within layers different from each other in the optical plate 22. When the reflecting surface 13A and the reflecting surface 13B are provided within the same layer in the optical plate 22, for example, each end of the reflecting surface 13A and the reflecting surface 13B may be in contact with each other. When the reflecting surface 13A and the reflecting surface 13B are provided within layers different from each other in the optical plate 22, for example, one of four corners of each of the reflecting surface 13A and the reflecting surface 13B may be in contact with each other.

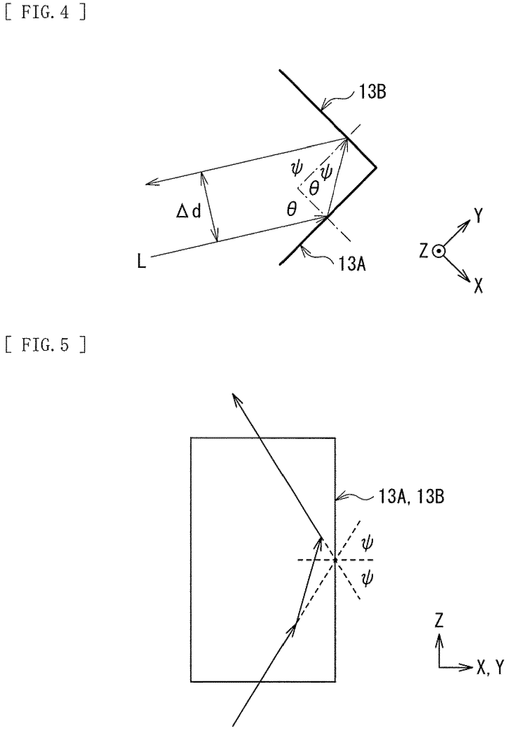

FIG. 4 illustrates an example of operation in the X-Y plane for the optical plate 22. FIG. 5 illustrates an example of operation in the X-Z plane and in the Y-Z plane for the optical plate 22. In the X-Y plane, light L incident from the back surface 22B side of the optical plate 22, for example, may be incident onto the reflecting surface 13A at an incoming angle θ to be reflected at an outgoing angle θ, and thereafter may be incident onto the reflecting surface 13B at an incoming angle ϕ to be reflected at an outgoing angle ϕ. Therefore, any light incident onto the reflecting surface 13A at an angle other than a normal direction of each of the reflecting surfaces 13A and 13B may be returned back to a direction it came along originally by the reflecting surfaces 13A and 13B. Here, in each of the optical elements 13, a misalignment amount Δd between an optical axis of light incident onto the optical element 13 and an optical axis of light reflected by the optical element 13 to be returned back is smaller than a diameter of the aperture 12. Accordingly, when a diameter of each aperture 12 is in the order of size described above, an X-Y-axis directional component of the light incident onto the reflecting surface 13A at any angle other than a normal direction of each of the reflecting surfaces 13A and 13B is reflected recursively by the reflecting surfaces 13A and 13B.

On the other hand, in the X-Z plane and in the Y-Z plane, the light L incident from the back surface 22B side of the optical plate 22, for example, may be incident onto the reflecting surface 13A at an incoming angle ψ to be reflected at an outgoing angle ψ, and thereafter may be incident onto the reflecting surface 13B at an incoming angle ψ to be reflected at an outgoing angle ψ, and may be emitted to the front surface 22A side of the optical plate 22. Therefore, the recursive reflection by the reflecting surfaces 13A and 13B does not appear in the Z-axis direction. This is why each of the optical elements 13 performs regular reflection of an incident light ray in a Z-axis directional component parallel to a normal line AX1 of the optical plate 22 (substrate 11), and performs recursive reflection of an incident light ray in an X-Y-axis directional component parallel to the back surface 22B of the optical plate 22.

For example, a luminescent object or an optically-irradiated object that emits divergent light may be disposed on the back surface 22B side of the optical plate 22, the divergent light emitted by the luminescent object or the optically-irradiated object may be transmitted through the optical plate 22, and thereafter may be convergent (imaged) on a plane-symmetrical location with respect to the optical plate 22 in positional relationship with the luminescent object or the optically-irradiated object. Therefore, the optical plate 22 functions as a plane-symmetrical imaging element that converges (images) the divergent light emitted by the luminescent object or the optically-irradiated object on the plane-symmetrical location with respect to the optical plate 22 in positional relationship with the luminescent object or the optically-irradiated object.

### (Non-Contact Input Section 30)

The non-contact input section 30 detects a position of an object such as a finger of the viewer 1000 in a state in which the object is not in contact with the image display surface 50S, and outputs a signal depending on a position detected in such a manner to the control section 40. The non-contact input section 30 uses a space region including a display region for the image 200 as a detection region. For example, the non-contact input section 30 may detect a position of an object existing in the above-described space region in such a manner that it outputs non-visible light toward the space region, and detects return light of the outgoing non-visible light. In other words, for example, the non-contact input section 30 may output non-visible light toward the above-described space region to detect return light of the outgoing non-visible light, thereby accepting a non-contact input. The non-contact input section 30 is configured of a proximity sensor, and may be configured of, for example, an infrared sensor, an ultrasonic sensor, a capacitance type sensor, and the like.

The non-contact input section 30 is disposed beneath the principal surface 50A of the housing 50, and may be disposed, for example, beneath the protective substrate 52 (at a location opposed to the protective substrate 52). Further, the non-contact input section 30 may be disposed next to the display section 20. When the non-contact input section 30 is disposed beneath the protective substrate 52, the protective substrate 52 is served as a translucent substrate that transmits light outgoing from the display sections 10 and 20, as well as the non-contact input section 30 therethrough. At this time, the non-contact input section 30 accepts a non-contact input by detecting return light of the light transmitted through the optical plate 20 and the protective substrate 52.

### (Control Section 40)

The control section 40 controls the display sections 10 and 20 on the basis of image signals incoming externally. For example, the control section 40 may drive the display section 10 to display only the image 100 on the image display surface 50A. Alternatively, for example, as illustrated in FIG. 6, the control section 40 may drive the display sections 10 and 20 to display the image 100 on the image display surface 50A, while displaying the image 200 in the air. Additionally, for example, the control section 40 may start driving of the display section 20 that has been halted, and may further start the in-air display of the image 200 from a state where the image 100 is being displayed on the image display surface 50A. Besides, for example, when the control section 40 detects some kind of signal externally, the control section 40 may display a thumbnail notifying detected contents as the image 200, instead of the image that was displayed at that time.

In the first embodiment, the display section 20 has a role of a slave in a relationship with the display section 10, and therefore an example of the image 200 may include an image of the contents prompting the viewer 1000 to perform touch input operation using the display section 10. Alternatively, an example of the image 200 may also include an image of the contents prompting the viewer 1000 to perform non-contact input operation by putting a finger or the like of the viewer 1000 over the image 200 instead of the touch input using the display section 10. The non-contact input is very beneficial especially in a situation where the viewer 1000 has difficulty touching the display section 10 directly with a finger or the like. When the display section 20 has the optical plate 22 that narrows down a viewing angle of the image 200, an example of the image 200 may include an image containing secret information (for example, a password) whose exposure to a next-door neighbor is undesirable.

### [Operation and Effects]

Next, the operation and effects of the electronic apparatus 1 will be described with reference to FIG. 6.

The divergent light (image light L1) emitted from a display panel of the display section 10 forms the image 100 on the principal surface 50A (image display surface 50S). On the other hand, the divergent light emitted from the display panel 21 is incident obliquely onto the back surface 22B of the optical plate 22. In the light incident obliquely onto the back surface 22B of the optical plate 22, a Z-axis directional component parallel to a normal line AX1 of the optical plate 22 (substrate 11) is reflected, and an X-Y-axis directional component parallel to the back surface 22B of the optical plate 22 is reflected recursively. The light (image light L2) that is transmitted through the optical plate 22 in such a manner is convergent (imaged) on a plane-symmetrical location with respect to a plane including the optical plate 22 in a relationship with the display panel 21 to form the image 200. Here, the optical plate 22 is disposed in parallel with the principal surface 50A, and the display panel 21 is disposed obliquely relative to the optical plate 22 at a location under the principal surface 50A. Therefore, as illustrated in FIG. 6, the image 200 is generated on the upper side of the principal surface 50A in a state of facing out to the viewer 1000 side.

Meanwhile, in the first embodiment, the display sections 10 and 20 are disposed in proximity to each other beneath the principal surface 50A of the housing 50. Accordingly, for example, when the viewer 1000 uses the display section 10 mainly, the viewer 1000 may perform renewed display using the display section 20 that has not been used mainly. Therefore, it is possible to perform renewed display without disturbing display of the display section 10 that has been used mainly. Additionally, in the first embodiment, the display sections 10 and 20 further perform display in modes different from each other. Specifically, the display section 10 generates the physical image 100 on the image display surface 50S, while the display section 20 generates the image 200 in the air. As a result, for example, when the viewer 1000 uses the display section 10 mainly, if the viewer 1000 performs renewed display using the display section 20 that has not been used mainly, it is possible to reduce the possibility that renewed display will be caught up in the original display. Therefore, in the first embodiment, it is possible to perform renewed display that is unlikely to be caught up in the original display, while minimizing an adverse influence on the visibility of the original display.

Further, in the first embodiment, in addition to generating the image 200 in the air with the help of the display section 20, it is possible to perform the non-contact input operation by putting a finger or the like of the viewer 1000 over the image 200 with the help of the non-contact input section 30. Accordingly, for example, in a situation where the viewer 1000 has difficulty touching the display section 10 directly with a finger or the like, it may be possible to display an image of the contents prompting the viewer 1000 to perform non-contact input operation by putting a finger or the like of the viewer 1000 over the image 200 instead of the touch input using the display section 10 as the image 200. Further, for example, it may be also possible to display an image including secret information (for example, a password) whose exposure to a next-door neighbor is undesirable as the image 200 with high directivity to a degree ensuring invisibility to the neighbor by use the display section 20.

### < 2. Modification Examples of First Embodiment >

### [Modification Example A]

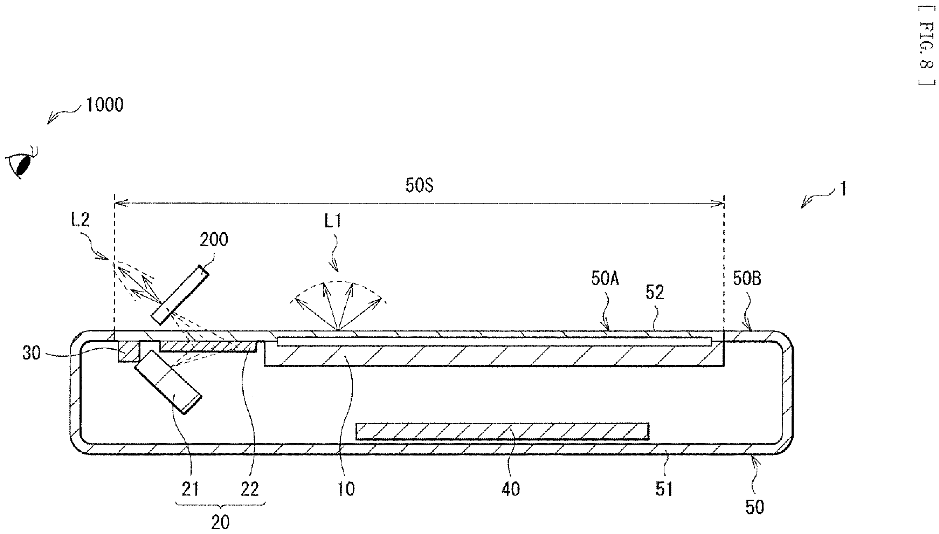

FIG. 7 illustrates a modification example of the electronic apparatus 1 according to the above-described first embodiment. FIG. 8 illustrates an example of operation of the electronic apparatus 1 according to this modification example A. In the modification example A, the display section 10 is disposed at a position closer to the upper end of the principal surface 50A (that is, a location away from the viewer 1000 of the electronic apparatus 1) as compared with the display section 20. Further, the display section 20 is disposed at a position closer to the lower end of the principal surface 50A (that is, a location close to the viewer 1000 of the electronic apparatus 1) as compared with the display section 10. In the modification example A, the image 200 is generated at a location closer to the viewer 1000 in the air. Accordingly, for example, the electronic apparatus 1 is a mobile terminal that is small enough to be portable with one hand of the viewer 1000, the viewer 1000 is allowed to perform the non-contact input operation only by putting a thumb in the air while holding the electronic apparatus 1.

### [Modification Example B]

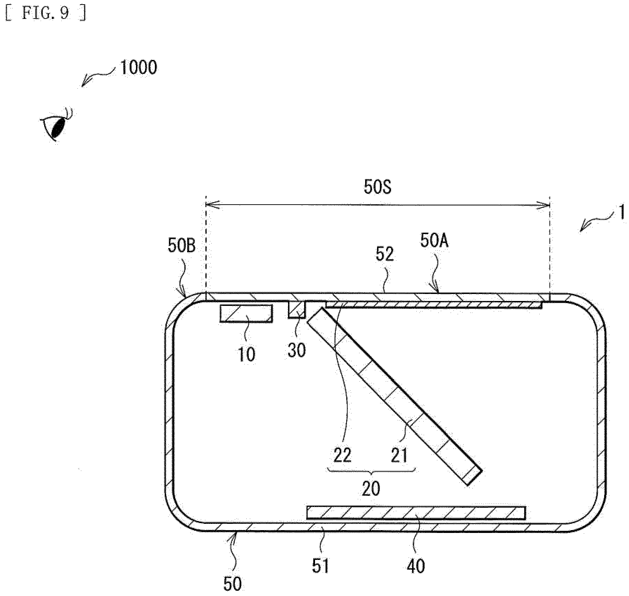

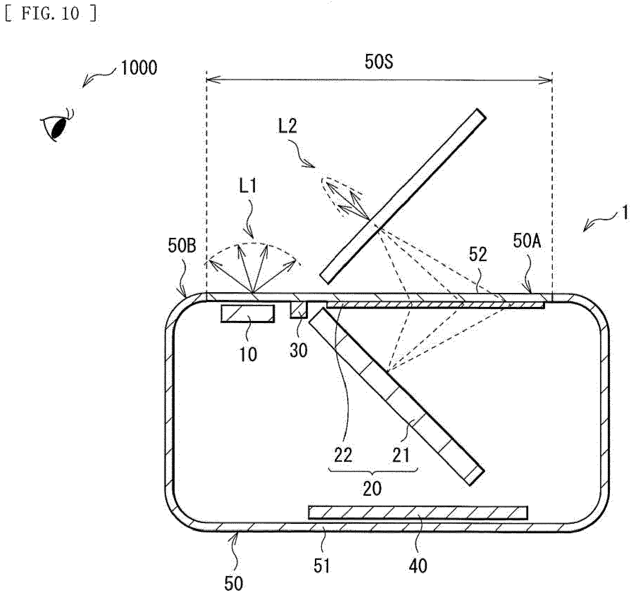

FIG. 9 illustrates a modification example of the electronic apparatus 1 according to the above-described first embodiment. FIG. 10 illustrates an example of operation of the electronic apparatus 1 according to this modification example B. In the modification example B, in the first embodiment, the display section 20 bears a master display function in a relationship with the display section 10, and performs image display using the area wider than the area of an image display region of the display section 10. Further, the display section 10 bears a slave display function in a relationship with the display section 20, and performs image display using the area narrower than the area of an image display region of the display section 20. The positional relationship between the display sections 10 and 20 is similar to that in the above-described first embodiment.

In the modification example B, the display section 20 that generates the image 200 through the in-air imaging bears a master display function. For example, as illustrated in FIG. 10, a region where the image 200 is generated may face toward the viewer 1000 side above the image display surface 50A. Therefore, for example, even if the electronic apparatus 1 is put on a table, the viewer 1000 may perceive the image 200 from somewhere in the region of the front side. Further, in the modification example B, for example, when the electronic apparatus 1 sets up the display section 20 to display a keyboard as the image 100 for performing the touch input using the display section 20, the viewer 1000 may handle the electronic apparatus 1 as if it were a notebook computer.

### [Modification Example C]

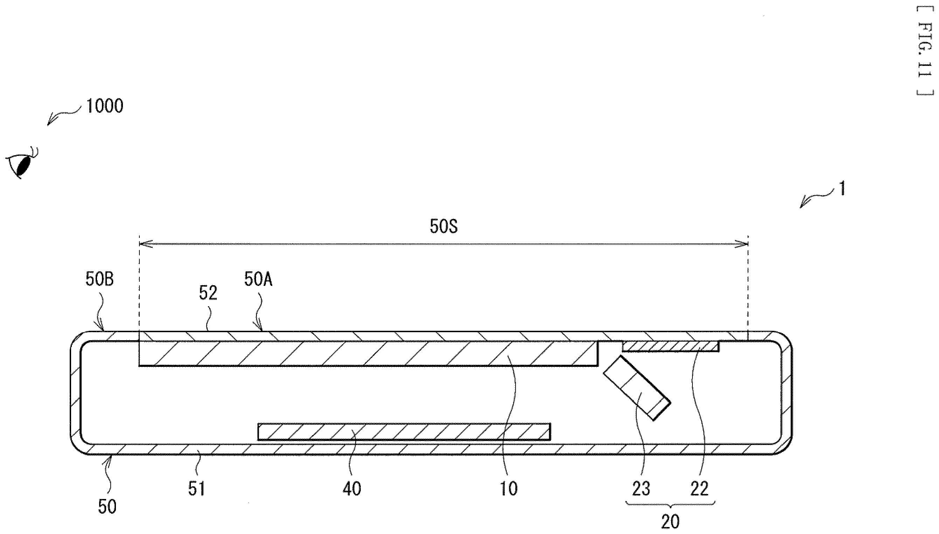

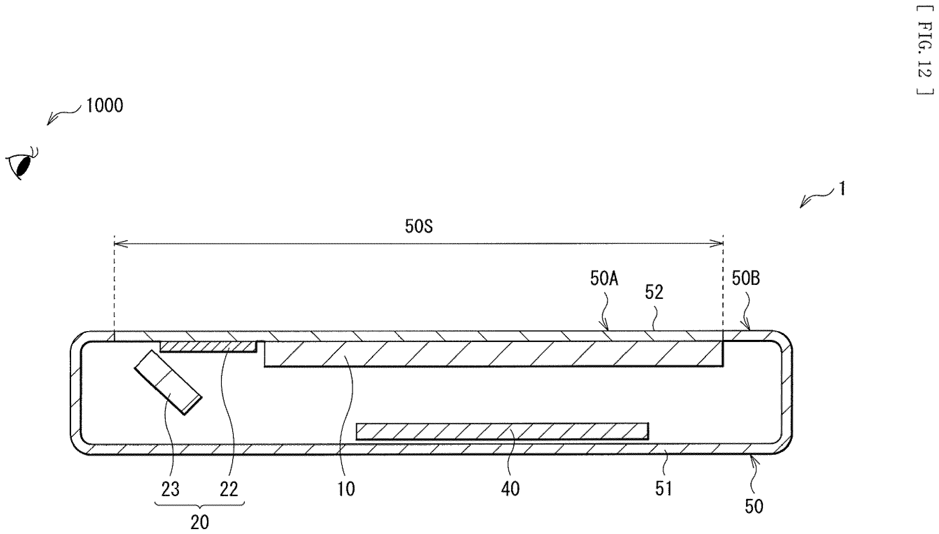

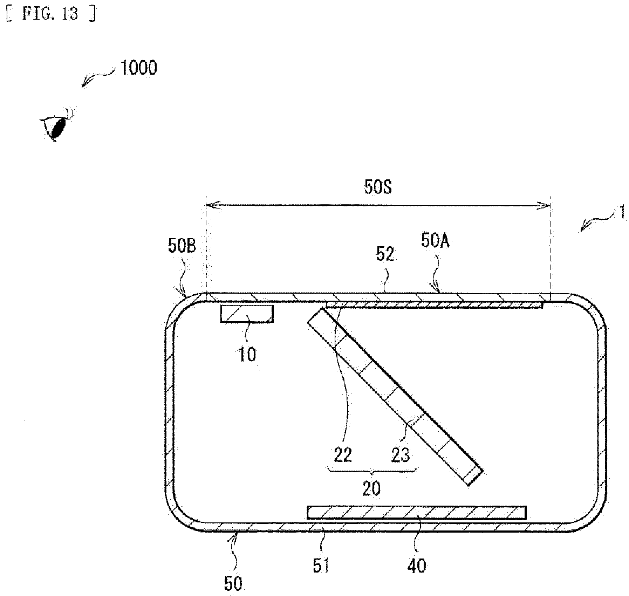

FIG. 11 illustrates a modification example of the electronic apparatus 1 illustrated in FIG. 1. FIG. 12 illustrates a modification example of the electronic apparatus 1 illustrated in FIG. 7. FIG. 13 illustrates a modification example of the electronic apparatus 1 illustrated in FIG. 9. In the electronic apparatus 1 described in each of FIG. 11, FIG. 12, and FIG. 13, instead of the display panel 21, there is provided a display panel 23 having a function of the non-contact input section 30 in addition to a function of the display panel 21. In other words, the display panel 23 has the built-in non-contact input section 30. On this occasion, the non-contact input section 30 outputs invisible light toward the optical plate 22. This outgoing invisible light is reflected by an object, and thereafter is transmitted through the optical plate 22 to be returned back. The non-contact input section 30 accepts a non-contact input by detecting such return light. This means that the non-contact input section 30 accepts the non-contact input by detecting the light returned back after transmission through the optical plate 22. This makes it possible to reduce a size of the housing 50 by a space saved through omission of the non-contact input section 30 as compared with a case where the non-contact input section 30 is provided separately. Further, as an optical path for guiding invisible light outgoing from the non-contact input section 30 to the outside, it is possible to use the optical plate 22, which allows the housing 50 to be reduced in size as compared with a case where such an optical path is provided separately. Additionally, invisible light emitted from the display panel 23 concentrates (is collected) on a location where the image 200 is generated, and thus it is possible to improve the detection sensitivity at the location where the image 200 is generated.

### < 3. Second Embodiment>

### [Configuration]

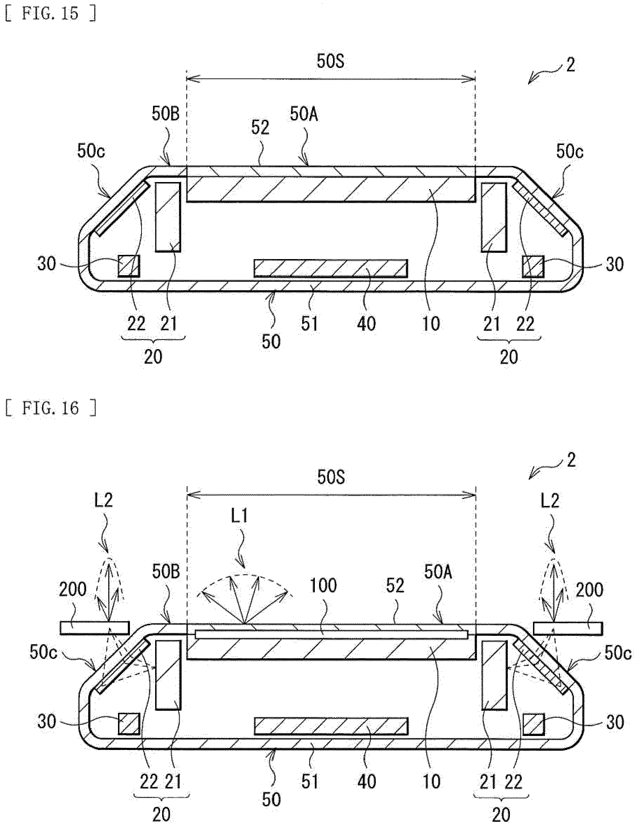

Next, the description is provided on an electronic apparatus 2 according to a second embodiment of the present technology. FIG. 14 illustrates an example of a perspective configuration of the electronic apparatus 2. FIG. 15 illustrates an example of a cross-sectional configuration of the electronic apparatus 2 along B-B' line illustrated in FIG. 14. As with the electronic apparatus 1, the electronic apparatus 2 performs two-screen display. In disregard of the capability of performing two-screen display, the electronic apparatus 2 is provided with only a single physical image display surface. In other words, the electronic apparatus 2 has no need of two physical image display surfaces for performing two-screen display. This does not exclude to provide one or more image display surfaces separately for performing any display other than the above-described two-screen display.

For example, as illustrated in FIG. 14, the electronic apparatus 2 may be provided with only a single frame 50B on a principal surface 50A of a housing 50 of the electronic apparatus 2, and may be further provided with a physical image display surface 50S within the frame 50B. For example, as illustrated in FIG. 15, the electronic apparatus 2 may include a single display section 10, two display sections 20, two non-contact input sections 30, and a control section 40 inside the housing 50 of the electronic apparatus 2.

In the second embodiment, an inclined surface 50C is provided on the side surface of the housing 50. Accordingly, a transverse cross-sectional shape of the electronic apparatus 2 is trapezoidal. The display sections 10 and 20 are disposed in proximity to each other beneath a principal surface 50A of the housing 50 (that is, at a location opposed to the principal surface 50A inside the housing 50). In the second embodiment, however, only the display section 10 is disposed beneath a protective substrate 52 (that is, at a location opposed to the protective substrate 52), and the display sections 20 are disposed at a location non-opposed to the protective substrate 52 (that is, at a location opposed to 50B).

Two display sections 20 are disposed on both sides of the display section 10 as viewed from the viewer 1000. In the second embodiment, the display section 10 bears a master display function in a relationship with the display sections 20, and performs image display using the area wider than the area of an image display region of each of the display sections 20. The display section 10 has the above-described display panel in parallel with the back surface of the principal surface 50A. Each of the display sections 20 bears a slave display function in a relationship with the display section 10, and performs image display using the area narrower than the area of an image display region of the display section 10.

In each of the display sections 20, for example, a display panel 21 may be disposed vertically relative to the back surface of the principal surface 50A. An optical plate 22 is disposed beneath the inclined surface 50C in parallel with the back surface of the inclined surface 50C. A portion corresponding to the inclined surface 50C in the housing 50 is made of a translucent member that transmits light outgoing from the display sections 20 and the non-contact input sections 30 therethrough. The display panel 21 emits divergent light from the image display surface thereof. The light outgoing from the display panel 21 is emitted externally through the optical plate 22 and the inclined surface 50C. The non-contact input sections 30 may be disposed, for example, beneath the inclined surface 50C of the housing 50. Further, the non-contact input sections 30 may be disposed next to the display sections 20. On this occasion, the non-contact input sections 30 output invisible light toward the optical plate 22. This outgoing invisible light is reflected by an object, and thereafter is transmitted through the optical plate 22 to be returned back. The non-contact input sections 30 accept a non-contact input by detecting such return light. This means that the non-contact input sections 30 accept the non-contact input by detecting the light returned back after transmission through the optical plate 22.

### [Operation and Effects]

Next, the operation and effects of the electronic apparatus 2 will be described with reference to FIG. 16.

The divergent light (image light L1) emitted from the display panel of the display section 10 forms the image 100 on the principal surface 50A (image display surface 50S). On the other hand, the divergent light emitted from the display panel 21 is incident obliquely onto the back surface 22B of the optical plate 22. In the light incident obliquely onto the back surface 22B of the optical plate 22, a Z-axis directional component parallel to a normal line AX1 of the optical plate 22 (substrate 11) is reflected, and an X-Y-axis directional component parallel to the back surface 22B of the optical plate 22 is reflected recursively. The light (image light L2) that is transmitted through the optical plate 22 in such a manner is convergent (imaged) on a plane-symmetrical location with respect to a plane including the optical plate 22 in a relationship with the display panel 21 to form the image 200. Here, the optical plate 22 is disposed in parallel with the inclined surface 50C, and the display panel 21 is disposed obliquely relative to the optical plate 22 at a location under the principal surface 50A, and is disposed vertically relative to the principal surface 50A. Therefore, as illustrated in FIG. 15, the image 200 is generated above the inclined surface 50C (in the air) in a state almost in parallel with the principal surface 50A.

Meanwhile, in the second embodiment, as with the above-described first embodiment, the display sections 10 and 20 are disposed in proximity to each other beneath the principal surface 50A of the housing 50. Accordingly, for example, when the viewer 1000 uses the display section 10 mainly, the viewer 1000 may perform renewed display using the display sections 20 that have not been used mainly. Therefore, it is possible to perform renewed display without disturbing display of the display section 10 that has been used mainly. Additionally, in the second embodiment, the display sections 10 and 20 further perform display in modes different from each other. Specifically, the display section 10 generates the image 100 on the image display surface 50S, while the display sections 20 generate the image 200 in the air. As a result, for example, when the viewer 1000 uses the display section 10 mainly, if the viewer 1000 performs renewed display using the display sections 20 that have not been used mainly, it is possible to reduce the possibility that renewed display will be caught up in the original display. Therefore, in the second embodiment, it is possible to perform renewed display that is unlikely to be caught up in the original display, while minimizing an adverse influence on the visibility of the original display.

Further, in the second embodiment, in addition to generating the image 200 in the air with the help of the display sections 20, it is possible to perform the non-contact input operation by putting a finger or the like of the viewer 1000 over the image 200 with the help of the non-contact input sections 30. Accordingly, for example, in a situation where the viewer 1000 has difficulty touching the display section 10 directly with a finger or the like, it may be possible to display an image of the contents prompting the viewer 1000 to perform the non-contact input operation by putting a finger or the like of the viewer 1000 over the image 200 instead of the touch input using the display section 10 as the image 200. Further, for example, it may be also possible to display an image including secret information (for example, a password) whose exposure to a next-door neighbor is undesirable as the image 200 with high directivity to a degree ensuring invisibility to the neighbor by use the display section 20.

Additionally, in the second embodiment, the non-contact input sections 30 accept the non-contact input by detecting the light returned back after transmission through the optical plate 22. This makes it possible to reduce a size of the housing 50 by a space saved through omission of the non-contact input sections 30 as compared with a case where the non-contact input sections 30 are provided separately. Further, as an optical path for guiding invisible light outgoing from the non-contact input sections 30 to the outside, it is possible to use the optical plate 22, which allows the housing 50 to be reduced in size as compared with a case where such an optical path is provided separately.

### < 4. Modification Example of Second Embodiment>

### [Modification Example D]

FIG. 17 illustrates a modification example of the electronic apparatus 2 illustrated in FIG. 15. In the electronic apparatus 2 described in FIG. 17, instead of the display panel 21, there is provided a display panel 23 having a function of the non-contact input section 30 in addition to a function of the display panel 21. In other words, the display panel 23 has the built-in non-contact input section 30. On this occasion, the non-contact input section 30 outputs invisible light toward the optical plate 22. This outgoing invisible light is reflected by an object, and thereafter is transmitted through the optical plate 22 to be returned back. The non-contact input section 30 accepts a non-contact input by detecting such return light. This means that the non-contact input section 30 accepts the non-contact input by detecting the light returned back after transmission through the optical plate 22. This makes it possible to reduce a size of the housing 50 by a space saved through omission of the non-contact input section 30 as compared with a case where the non-contact input section 30 is provided separately. Further, as an optical path for guiding invisible light outgoing from the non-contact input section 30 to the outside, it is possible to use the optical plate 22, which allows the housing 50 to be reduced in size as compared with a case where such an optical path is provided separately. Additionally, invisible light emitted from the display panel 23 concentrates (is collected) on a location where the image 200 is generated, and thus it is possible to improve the detection sensitivity at the location where the image 200 is generated.

The present technology is described thus far with reference to the embodiments and modification examples thereof; however, the present technology is not limited to the above-described embodiments and the like, but various modifications may be made. It is to be noted that the effects described in the present specification are provided only for illustrative purposes. Therefore, the effects of the present technology are not limited to those described in the present specification. The present technology may have any effects other than those described in the present specification.

For example, the present technology may be configured as follows.
(1) An electronic apparatus, comprising:
   a first display section and a second display section that are disposed in proximity to each other beneath a principal surface of a housing, wherein
      the first display section generates a first image on the principal surface, and
      the second display section generates a picture imaged in air as a second image.
(2) The electronic apparatus according to claim 1, wherein the second display section generates, as the second image, the picture that is imaged in the air using a light ray with a divergence angle narrower than a viewing angle of the first display section.
(3) The electronic apparatus according to claim 2, wherein the second display section has:
   an optical plate in which a plurality of optical elements are provided in a matrix pattern, each of the optical elements performing regular reflection of an incident light ray in a Z-axis directional component and performing recursive reflection of an incident light ray in an X-Y-axis directional component for a substrate in which a Z-axis direction is a normal line; and
   a display panel that emits image light corresponding to the second image to the optical plate.
(4) The electronic apparatus according to claim 3, wherein the optical plate is disposed beneath the principal surface in parallel with the principal surface.
(5) The electronic apparatus according to claim 3, wherein
   the housing has an inclined surface on a side surface, and
   the optical plate is disposed beneath the inclined surface in parallel with the inclined surface.
(6) The electronic apparatus according to any one of claims 1 to 5, further comprising a non-contact input section that uses a space region including a display region of the second image as a detection region.
(7) The electronic apparatus according to claim 6, wherein the non-contact input section is disposed at a location beneath the principal surface of the housing and in proximity to the second display section.
(8) The electronic apparatus according to claim 6, wherein the non-contact input section accepts a non-contact input by detecting light returned back after transmission through the optical plate.
(9) The electronic apparatus according to claim 8, wherein
   the non-contact input section accepts a non-contact input by outputting invisible light and detecting return light of the outgoing invisible light, and
   the second display section has the built-in non-contact input section.

This application claims the priority on the basis of Japanese Patent Application No. 2014-72475 filed on March 31, 2014 in Japan Patent Office, the entire contents of which are incorporated in this application by reference.

It should be understood by those skilled in the art that various modifications, combinations, sub-combinations, and alterations may occur depending on design requirements and other factors insofar as they are within the scope of the appended claims or the equivalents thereof.

## Claims

1. An electronic apparatus, comprising:
a first display section and a second display section that are disposed in proximity to each other beneath a principal surface of a housing, wherein
the first display section generates a first image on the principal surface, and
the second display section generates a picture imaged in air as a second image.

2. The electronic apparatus according to claim 1, wherein the second display section generates, as the second image, the picture that is imaged in the air using a light ray with a divergence angle narrower than a viewing angle of the first display section.

3. The electronic apparatus according to claim 2, wherein the second display section has:
an optical plate in which a plurality of optical elements are provided in a matrix pattern, each of the optical elements performing regular reflection of an incident light ray in a Z-axis directional component and performing recursive reflection of an incident light ray in an X-Y-axis directional component for a substrate in which a Z-axis direction is a normal line; and
a display panel that emits image light corresponding to the second image to the optical plate.

4. The electronic apparatus according to claim 3, wherein the optical plate is disposed beneath the principal surface in parallel with the principal surface.

5. The electronic apparatus according to claim 3, wherein
the housing has an inclined surface on a side surface, and
the optical plate is disposed beneath the inclined surface in parallel with the inclined surface.

6. The electronic apparatus according to claim 2, further comprising a non-contact input section that uses a space region including a display region of the second image as a detection region.

7. The electronic apparatus according to claim 6, wherein the non-contact input section is disposed at a location beneath the principal surface of the housing and in proximity to the second display section.

8. The electronic apparatus according to claim 6, wherein the non-contact input section accepts a non-contact input by detecting light returned back after transmission through the optical plate.

9. The electronic apparatus according to claim 8, wherein
the non-contact input section accepts a non-contact input by outputting invisible light and detecting return light of the outgoing invisible light, and
the second display section has the built-in non-contact input section.

## Amended claims

### Amended claims under Art. 19.1 PCT

**1.** (Amended)
An electronic apparatus, comprising:
a first display section and a second display section that are disposed in proximity to each other beneath a principal surface of a housing, wherein
the first display section generates a first image on the principal surface, and
the second display section generates a picture imaged in air as a second image, the second display section has:
an optical plate in which a plurality of optical elements are provided in a matrix pattern, each of the optical elements performing regular reflection of an incident light ray in a Z-axis directional component and performing recursive reflection of an incident light ray in an X-Y-axis directional component for a substrate in which a Z-axis direction is a normal line; and
a display panel that emits image light corresponding to the second image to the optical plate, and
the housing has an inclined surface on a side surface, and
the optical plate is disposed beneath the inclined surface in parallel with the inclined surface.

**2.** The electronic apparatus according to claim 1, wherein the second display section generates, as the second image, the picture that is imaged in the air using a light ray with a divergence angle narrower than a viewing angle of the first display section.

**3.** (Amended)
The electronic apparatus according to claim 1, wherein the optical plate is disposed beneath the principal surface in parallel with the principal surface.

**4.** (Amended)
An electronic apparatus, comprising:
a first display section and a second display section that are disposed in proximity to each other beneath a principal surface of a housing, wherein
the first display section generates a first image on the principal surface, and
the second display section generates a picture imaged in air as a second image, and
the electronic apparatus further includes a non-contact input section that uses a space region including a display region of the second image as a detection region, and
the non-contact input section is disposed at a location beneath the principal surface of the housing and in proximity to the second display section.

**5.** (Amended)
The electronic apparatus according to claim 4, wherein the second display section generates, as the second image, the picture that is imaged in the air using a light ray with a divergence angle narrower than a viewing angle of the first display section.

**6.** (Amended)
The electronic apparatus according to claim 4, wherein the second display section has:
an optical plate in which a plurality of optical elements are provided in a matrix pattern, each of the optical elements performing regular reflection of an incident light ray in a Z-axis directional component and performing recursive reflection of an incident light ray in an X-Y-axis directional component for a substrate in which a Z-axis direction is a normal line; and
a display panel that emits image light corresponding to the second image to the optical plate.

**7.** (Amended)
The electronic apparatus according to claim 4, wherein the optical plate is disposed beneath the principal surface in parallel with the principal surface.

**8.** (Amended)
An electronic apparatus, comprising:
a first display section and a second display section that are disposed in proximity to each other beneath a principal surface of a housing, wherein
the first display section generates a first image on the principal surface, and
the second display section generates a picture imaged in air as a second image, and
the electronic apparatus further includes a non-contact input section that uses a space region including a display region of the second image as a detection region, and
the non-contact input section accepts a non-contact input by detecting light returned back after transmission through the optical plate.

**9.** The electronic apparatus according to claim 8, wherein
the non-contact input section accepts a non-contact input by outputting invisible light and detecting return light of the outgoing invisible light, and
the second display section has the built-in non-contact input section.

**10.** Added)
The electronic apparatus according to claim 8, wherein the second display section generates, as the second image, the picture that is imaged in the air using a light ray with a divergence angle narrower than a viewing angle of the first display section.

**11.** Added)
The electronic apparatus according to claim 8, wherein the second display section has:
an optical plate in which a plurality of optical elements are provided in a matrix pattern, each of the optical elements performing regular reflection of an incident light ray in a Z-axis directional component and performing recursive reflection of an incident light ray in an X-Y-axis directional component for a substrate in which a Z-axis direction is a normal line; and
a display panel that emits image light corresponding to the second image to the optical plate.

**12.** Added)
The electronic apparatus according to claim 8, wherein the optical plate is disposed beneath the principal surface in parallel with the principal surface.
